# EUROPÄISCHE PATENTSCHRIFT

(11) **EP 0 482 296 B1**
(45) Veröffentlichungstag und Bekanntmachung des Hinweises auf die Patenterteilung: **02.03.1994**
(21) Anmeldenummer: 91110523.7
(22) Anmeldetag: 26.06.1991
(51) Int. Cl.: B60G 13/00

(54) **Stützlager für einen Stossdämpfer**
Support for a shock absorber
Support pour un amortisseur

(30) Priorität: 22.10.1990 DE 4033519
(43) Veröffentlichungstag der Anmeldung: 29.04.1992
(73) Patentinhaber: Firma Carl Freudenberg, 69469 Weinheim (DE)
(72) Erfinder: Hamaekers, Arno, W-6946 Gorxheimer Tal (DE); Simuttis, Arnold, Dr., W-6550 Bad Kreuznach (DE); Stahl, Manfred, W-6803 Edingen-Neckarhausen 2 (DE)

(56) Entgegenhaltungen:
- DE-A- 3 823 238
- US-A- 4 733 854
- US-A- 4 795 140

## Beschreibung

Die Erfindung betrifft ein Stützlager für einen Stoßdämpfer mit einem in Dämpfungsrichtung vorspringenden, säulenartigen Zapfen, der von einem kreisringförmig gestalteten, elastischen Zwischenglied dichtend umschlossen ist, wobei das Zwischenglied im Bereich seines radial nach außen vorstehenden Randes an einem Traglager befestigt ist und zwei flüssigkeitsgefüllte Arbeitsräume voneinander trennt, die durch wenigstens eine kanalartig ausgebildete Verbindungsöffnung verbunden und durch elastische Begrenzungswände nach außen abgeschlossen sind, die einerseits an dem Zapfen und andererseits an dem Traglager dichtend befestigt sind, wobei das Zwischenglied aus einer Membran besteht, wobei die Begrenzungswände durch Hohlkegel gebildet sind und wobei die Hohlkegel Hohlkegelspitzen aufweisen, die voneinander wegweisend an dem Zapfen befestigt und durch den Zapfen gegeneinander verspannt sind.

Ein solches Stützlager ist aus der US-A-4 733 854 bekannt. Dabei ist allerdings zu beachten, daß das Zwischenglied zwar aus einem gummielastischen Werkstoff besteht, daß jedoch aufgrund seiner Dimensionierung nur eine geringe elastische Nachgiebigkeit und somit eine unbefriedigende Isolierung akustisch störender Schwingungen bedingt ist.

Der Erfindung liegt die Aufgabe zugrunde, ein solches Stützlager derart weiterzuentwickeln, daß die genannten Nachteile vermieden werden, eine wirkungsvolle Isolierung akustisch störender Schwingungen durch das Lager erfolgt und Dröhnschwingungen im Kraftfahrzeug vermieden werden.

Diese Aufgabe wird erfindungsgemäß mit einem Stützlager der eingangs genannten Art dadurch gelöst, daß die Membran radial innerhalb des Traglagers ein U-förmig in Dämpfungsrichtung vorspringendes Profil aufweist, das den Zapfen koaxial umschließt. Die Verformbarkeit entspricht bei einer solchen Ausführung derjenigen einer Rollmembran, was die Relativbeweglichkeit des Zapfens in bezug auf das Traglager verbessert und insbesondere in bezug auf die Isolierung akustisch störender Schwingungen von Vorteil ist. Derartige Schwingungen können sich im Bereich der Radaufhängung eines Kraftfahrzeugs beim schnellen Uberfahren rauher Fahrbahnoberflächen ergeben oder bei der Verwendung von Reifen mit einem grobstolligen Profil. Sie können sich bei schlechter Isolierung als Dröhnschwingungen im Kraftfahrzeug bemerkbar machen.

In bezug auf die Erzielung einer guten Abkopplung von Fahrwerksschwingungen der vorgenannten Art von einem Fahrzeugaufbau hat es sich als vorteilhaft bewährt, wenn die Membran aus einem besonders nachgiebigen, gummielastischen Werkstoff besteht, beispielsweise aus einem solchen mit einer Härte Shore A von 30 bis 45. Ferner bewirkt die Ausgestaltung des Stützlagers, daß die durch die Hitzevulkanisierung des die Tragfeder bildenden, gummielastischen Werkstoffs verursachten Schrumpfspannungen völlig eliminiert sind, was eine gute Gebrauchsdauer bedingt.

Als zweckmäßig hat es sich erwiesen, wenn die Verspannung, bei der es sich um eine Druckvorspannung handelt, so gewählt ist, daß das Auftreten von Zugspannungen in den Tragfedern auch bei der Einleitung der betriebsbedingten aufzunehmenden Schwingungen völlig ausgeschlossen ist.

Durch die gegenseitige Verspannung der hohlkegeligen Tragfedern herrscht in den beiden Arbeitsräumen des erfindungsgemäßen Stützlagers ein latenter Überdruck. Dem Auftreten von Kavitationserscheinungen während der Einleitung von Schwingungen wird hierdurch vorgebeugt, was die Dauerhaltbarkeit verbessert.

Bei Einleitung von Schwingungen großer Amplitude ergibt sich in dem erfindungsgemäßen Stützlager eine Dämpfungswirkung, welche maßgeblich auf der Hindurchpressung von Flüssigkeitsbestandteilen durch die Verbindungsöffnung beruht. Die Dämpfungswirkung ist breitbandig in einem großen Frequenzbereich wirksam, wenn die Verbindungsöffnung als Drosselöffnung ausgebildet ist. Es gibt jedoch auch Anwendungsfälle, in denen in einem bestimmten Frequenzbereich eine Dämpfungswirkung von besonders großer Güte erwünscht ist, und für derartige Anwendungsfälle empfiehlt es sich, die Verbindungsöffnung kanalartig zu gestalten und so zu dimensionieren, daß sich bei Einleitung von Schwingungen der zu bedämpfenden Frequenz eine Resonanzbewegung der von der Verbindungsöffnung umschlossenen Flüssigkeitsmasse ergibt.

Durch das Vorhandensein einer Verbindungsöffnung zwischen den beiden Arbeitsräumen ist die sich in diesen unter normalen Betriebsbedingungen ergebende Druckdifferenz nur relativ gering. Das Zwischenglied zwischen den Arbeitsräumen kann dadurch membranartig dünn gestaltet sein und aus einem gummielastischen Werkstoff bestehen, ohne daß eine vorzeitige Zerstörung befürchtet werden müßte. Die Relativbeweglichkeit des Zapfens in bezug auf das Traglager wird hierdurch nicht nennenswert behindert.

Die Membran kann durch den Zapfen im Bereich ihres Innenumfangs elastisch aufgeweitet sein, um die erforderliche gegenseitige Abdichtung beider Teile zu vereinfachen. Die Verwendung sekundärer Abdichtmittel ist hiervon unabhängig selbstverständlich ebenfalls möglich.

Als besonders vorteilhaft hat es sich erwiesen, wenn die Membran den Zapfen relativ verschiebbar berührt. Einer Zerstörung als Folge von erhöhten Einfederungsbewegungen des Zapfens läßt sich hierdurch wirksam begegnen.

In bezug auf die Erzielung einer langen Gebrauchsdauer hat es sich als vorteilhaft bewährt, wenn die Membran im Bereich ihres Innenumfangs mit einer wulstartig umlaufenden Verdickung versehen ist. Die auf den Zapfen übertragbaren, radialen Anpreßkräfte lassen sich hierdurch vergrößern, was das erzielte Abdichtungsergebnis verbessert. Zusätzlich ergibt sich bei relativ verschiebbaren Ausführungen eine Vergrößerung des Verschleißvolumens, was die Langlebigkeit verbessert.

Der im Hinblick auf die Erzielung einer guten Dämpfungswirksamkeit erforderliche Formungswiderstand gegenüber den Arbeitsräumen läßt sich gleichwohl erreichen, wenn die in radialer Richtung aufeinanderfolgenden, sich im wesentlichen achsparallel erstreckenden Schenkel des U-förmigen Profils eine radiale Dicke haben, die mit ihrem radialen Abstand im wesentlichen übereinstimmt. Die zugehörige axiale Tiefe der von dem U-förmigen Profil umschlossenen Ausnehmung soll etwa dem 2- bis 4-fachen Wert der radialen Weite entsprechen, um eine radiale Zusammenpressung und die Bildung von Falten zu verhindern und auf diese Weise einen geringen Verformungswiderstand bei der Einfederung des Zapfens zu gewährleisten.

Eine weitere Verbesserung läßt sich erzielen, wenn der radial innenliegende Schenkel des U-förmigen Profils der Membran den Zapfen und der radial außenliegende Schenkel des U-förmigen Profils dem Traglager unmittelbar benachbart ist. Das U-förmige Profil der Membran erfährt hierdurch eine Abstützung in radialer Richtung, was Exzentrizitäten vorbeugt und im langfristigen Gebrauch des Stützlagers einen besonders gleichmäßigen Abrollvorgang des U-förmigen Profils der Membran gewährleistet.

Die Membran kann im Bereich ihres radial nach außen vorspringenden Randes von sich im wesentlichen quer zur Dämpfungsrichtung erstreckenden Halteplatten des Traglagers axial umgriffen sein. Sie kann bei einer solchen Ausführung unabhängig von den Halteplatten und dem Traglager erzeugt sein, was aus fertigungstechnischen Gründen von Vorteil ist.

Eine besonders gute Abkopplung akustisch störender Schwingungen läßt sich erreichen, wenn die Halteplatten den nach außen vorstehenden Rand der Membran mit axialem Spiel umgreifen. Das Spiel ist so bemessen, daß die akustisch störenden Schwingungen unter Vermeidung einer elastischen Deformierung der Membran durch einfache Hin- und Herbewegung aufgenommen werden können. Die Ubertragung von Kräften bei Einleitung entsprechender Schwingungen über die Membran ist bei einer solchen Ausführung völlig ausgeschlossen.

Der vorstehend angesprochene Effekt tritt besonders deutlich in Erscheinung, wenn die Halteplatten im Bereich des nach außen vorstehenden Randes der Membran glitterartig in Richtung der Arbeitsräume durchbrochen sind. Das zwischen dem Rand und der Membran eingeschlossene Flüssigkeitsvolumen kann bei einer solchen Ausbildung leichter entweichen, was die Relativbeweglichkeit der Membran verbessert.

Der Gegenstand der Erfindung wird nachfolgend anhand der in der Anlage beigefügten Zeichnung weiter verdeutlicht. Diese zeigt ein Stützlager für einen Stoßdämpfer 1, der einen Bestandteil eines Federbeins bilden kann, in längsgeschnittener Darstellung, bei dem der Stoßdämpfer 1 mit einem in Dämpfungsrichtung vorspringenden, säulenartig ausgebildeten Zapfen 2 versehen ist, der von einer kreisringförmig gestalteten Membran 8 dichtend umschlossen ist. Die Membran ist im Bereich ihres radial nach außen vorstehenden Randes von zwei Halteplatten 10 axial umschlossen, welche ihrerseits in dem Traglager 3 festgelegt sind. Die Membran 8 und die Halteplatten 10 trennen zwei flüssigkeitsgefüllte Arbeitsräume 4 voneinander, die durch eine kanalartig ausgebildete Verbindungsöffnung 5 untereinander verbunden sind. In axialer Richtung nach außen sind die beiden Arbeitsräume 4 durch elastische Begrenzungswände 6, 7 abgeschlossen, die hohlkegelig gestaltet sind. Die Begrenzungswände sind als Tragfedern gestaltet und mit der Basis an dem Traglader 3 festgelegt. Die voneinander abweisenden Spitzen umschließen den Zapfen 2 im Bereich der einander gegenüberliegenden Enden und sind durch den Zapfen 2 miteinander verspannt. Der Zapfen 2 bildet einen Bestandteil des nicht gezeigten Stoßdämpfers.

Die in der Darstellung gezeigte Ausführung der Membran 8 ist im Bereich ihres in radialer Richtung nach außen vorstehenden Randes von Halteplatten 10 mit axialem Spiel umgriffen. Die Halteplatten 10 sind im Bereich des Randes gitterartig gestaltet und mit in Richtung der Arbeitsräume 4 offenen Durchbrechungen 11 versehen. Der Rand und damit die Membran 8 ist hierdurch bei Einleitung akustisch störender, hochfrequenter Schwingungen in bezug auf die Halteplatte 10 in Dämpfungsrichtung leicht verschiebbar, was eine Ubertragung derartiger Schwingungen auf das Traglager 3 weitestgehend ausschließt.

Die Membran 8 ist radial innenseitig durch eine wulstartig umlaufende Verdickung 9 begrenzt, welche eine den Zapfen 2 umschließende Schonhülse 12 unter elastischer Vorspannung dichtend berührt. Die wulstartige Verdickung 9 ist relativ zu der Schonhülse 12 und damit zu dem Zapfen 2 in Dämpfungsrichtung verschiebbar, was eine Beschädigung der Membran 8 beim Auftreten von extremen Ein- bzw. Ausfederungen weitestgehend ausschließt.

Die Membran 8 weist zwischen der Verdickung 9 und dem in radialer Richtung nach außen vorspringenden Rand ein U-förmig in Dämpfungsrichtung vorspringendes Profil auf, das den Zapfen 2 koaxial umschließt. Die in radialer Richtung aufeinanderfolgenden, sich im wesentlichen achsparallel erstreckenden Schenkel des U-förmigen Profils haben hierbei eine radiale Dicke, die mit ihrem radialen Abstand im wesentlichen übereinstimmt. Hierdurch und durch den geringen radialen Abstand, den der innenliegende Schenkel des U-förmigen Profils von der Schonhülse 12 einerseits und der radial außenliegende Schenkel des U-förmigen Profils von der zentralen Ausnehmung der Halteplatte 10, aufweist ergibt sich ein gleichmäßiger Abrollvorgang der Membran 8 bei der Einleitung betriebsbedingt aufzunehmender Schwingungen. Die Dauerhaltbarkeit wird hierdurch entschieden verbessert.

Um einer Zerstörung des Stützlagers beim Auftreten extremer Ein- bzw. Ausfederungen vorzubeugen, sind in Endanschläge 13 zwischen Zapfen 2 und dem Traglager 3 angebracht. Sie können inner- oder außerhalb der Arbeitsräume 4 vorgesehen sein.

Die Arbeitsräume 4 und die Verbindungsöffnung 5 sind vollständig mit einer hydraulischen Flüssigkeit gefüllt, beispielsweise mit einem Gemisch aus Glykol und Wasser. Die Verbindungsöffnung 5 ist kanalartig gestaltet und so dimensioniert, daß sich bei Einleitung von Schwingungen einer besonders störenden Frequenz eine Resonanzbewegung der umschlossenen Flüssigkeitsmasse ergibt. Hierdurch wird eine gute Dämpfung derartiger Schwingungen bewirkt.

Bei Einleitung akustisch störender Schwingungen einer hohen Frequenz ergibt sich demgegenüber nur eine axiale Hin- und Herbewegung des nach außen vorstehenden Randes der Membran 8 innerhalb des durch das axiale Spiel zu den Halteplatten 10 vorgegebenen Freiraums. Die Schwingungen können daher nicht von dem Stoßdämpfer 1 auf das Traglager 3 übertragen werden.

Das Traglager 3 ist im Bereich seiner Unterseite mit einem Winkelring 14 aus gummielastischem Werkstoff versehen, der das obere Ende einer metallischen Schraubenfeder 15 in radialer Richtung und in axialer Richtung überdeckt. Die Härte des für die Herstellung des Winkelringes 14 verwendeten, gummielastischen Werkstoffes ist dabei so gewählt, daß auch über die Schraubenfeder Dröhnschwingungen nicht übertragen werden können und daß sich zusätzlich eine gewisse Dämpfungswirkung in bezug auf derartige Schwingungen ergibt.

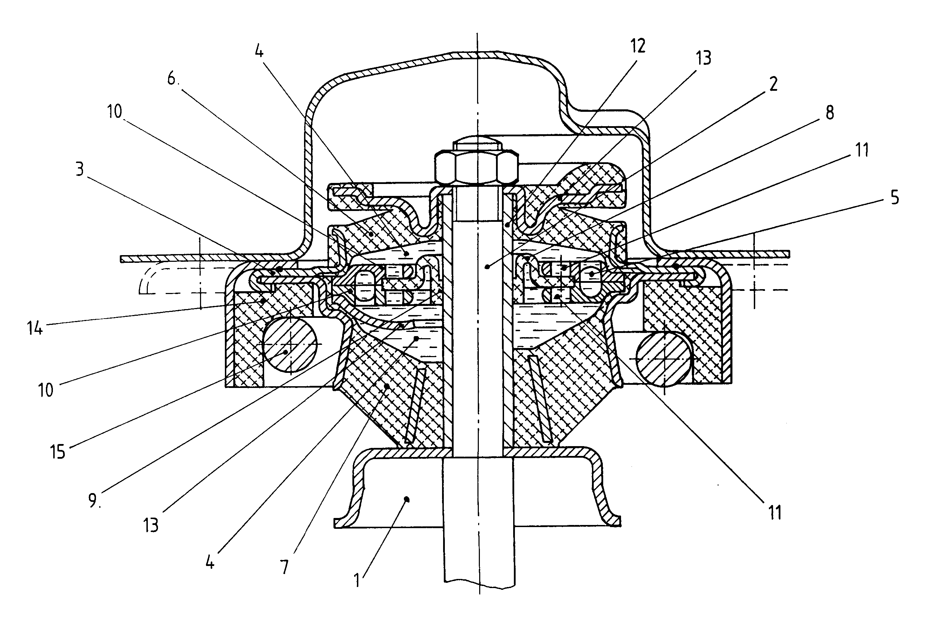

## Patentansprüche

1. Stützlager für einen Stoßdämpfer (1) mit einem in Dämpfungsrichtung vorspringenden, säulenartig ausgebildeten Zapfen (2), der von einem kreisringförmig gestalteten, elastischen Zwischenglied dichtend umschlossen ist, wobei das Zwischenglied im Bereich seines radial nach außen vorstehenden Randes an einem Traglager (3) befestigt ist und zwei flüssigkeitsgefüllte Arbeitsräume (4) voneinander trennt, die durch wenigstens eine kanalartig ausgebildete Verbindungsöffnung (5) verbunden und durch elastische Begrenzungswände (6, 7) nach außen abgeschlossen sind, die einerseits an dem Zapfen (2) und andererseits an dem Traglager (3) dichtend befestigt sind, wobei das Zwischenglied aus einer Membran (8) besteht, wobei die Begrenzungswände (6, 7) durch Hohlkegel gebildet sind und wobei die Hohlkegel Hohlkegelspitzen aufweisen, die voneinander wegweisend an dem Zapfen (2) befestigt und durch den Zapfen (2) gegeneinander verspannt sind, dadurch gekennzeichnet, daß die Membran (8) radial innerhalb des Traglagers (3) ein U-förmig in Dämpfungsrichtung vorspringendes Profil aufweist, das den Zapfen (2) koaxial umschließt.

2. Stützlager nach Anspruch 1, dadurch gekennzeichnet, daß die Membran (8) durch den Zapfen (2) im Bereich ihres Innenumfangs elastisch aufgeweitet ist.

3. Stützlager nach einem der Ansprüche 1 oder 2, dadurch gekennzeichnet, daß die Membran (8) den Zapfen (2) relativ verschiebbar berührt.

4. Stützlager nach einem der Ansprüche 1 bis 3, dadurch gekennzeichnet, daß die Membran (8) im Bereich ihres Innenumfangs mit einer wulstartig umlaufenden Verdickung (9) versehen ist.

5. Stützlager nach einem der Ansprüche 1 bis 4, dadurch gekennzeichnet, daß die in radialer Richtung aufeinander folgenden, sich im wesentlichen achsparallel erstreckenden Schenkel des Profils der Membran (8) in radialer Richtung eine Dicke haben, die mit ihrem radialen Abstand voneinander im wesentlichen übereinstimmt.

6. Stützlager nach Anspruch 5, dadurch gekennzeichnet, daß der radial innenliegende Schenkel dem Zapfen (2) unmittelbar und der radial außenliegende Schenkel dem Traglager (3) unmittelbar benachbart ist.

7. Stützlager nach einem der Ansprüche 1 bis 6, dadurch gekennzeichnet, daß die Membran (8) im Bereich ihres radial nach außen vorspringenden Randes von sich im wesentlichen quer zur Dämpfungsrichtung erstreckenden Halteplatten (10) des Traglagers (3) axial umgriffen ist.

8. Stützlager nach Anspruch 7, dadurch gekennzeichnet, daß die Halteplatten (10) den Rand mit axialem Spiel umgreifen.

9. Stützlager nach Anspruch 8, dadurch gekennzeichnet, daß die Halteplatten (10) im Bereich des Randes der Membran (8) gitterartig in Richtung der Arbeitsräume (4) durchbrochen sind.

## Claims

1. A support mounting for a shock absorber (1) having a pin (2) which projects in the damping direction, is of columnar design, and is enclosed in a sealing manner by a circular, elastic intermediate member, the intermediate member being fastened in the region of its radially outwardly projecting edge to a bearing support (3) and separating from each other two liquid-filled workspaces (4), which are connected by at least one channel-like connecting opening (5) and are outwardly closed off by elastic boundary walls (6, 7), which are fastened in a sealing manner to the pin (2) on the one hand and to the bearing support (3) on the other hand, the intermediate member comprising a diaphragm (8), the boundary walls (6, 7) being formed by hollow cones and the hollow cones having hollow conical apices which are fastened pointing away from one another to the pin (2) and are tensioned against one another by the pin (2), characterised in that the diaphragm (8) has, radially within the bearing support (3), a profile which projects in a U-shaped manner in the damping direction and coaxially encloses the pin (2).

2. A support mounting according to claim 1, characterised in that the diaphragm (8) is elastically expanded in the region of its inner circumference by the pin (2).

3. A support mounting according to either of claims 1 or 2, characterised in that the diaphragm (8) contacts the pin (2) so as to be relatively movable.

4. A support mounting according to any of claims 1 to 3, characterised in that, in the region of its inner circumference, the diaphragm (8) is provided with an enlargement (9) surrounding it in a bead-like manner.

5. A support mounting according to any of claims 1 to 4, characterised in that the legs of the profile of the diaphragm (8), which succeed one another in the radial direction and extend substantially axially parallel, have a thickness in the radial direction which corresponds essentially to their radial spacing from one another.

6. A support mounting according to claim 5, characterised in that the radially inner leg is directly adjacent to the pin (2) and the radially outer leg is directly adjacent to the bearing support (3).

7. A support mounting according to any of claims 1 to 6, characterised in that the diaphragm (8) is axially embraced in the region of its radially outwardly projecting edge by holding plates (10) of the bearing support (3) which extend essentially transversely to the damping direction.

8. A support mounting according to claim 7, characterised in that the holding plates (10) embrace the edge with axial play.

9. A support mounting according to claim 8, characterised in that the holding plates (10) are perforated in the region of the edge of the diaphragm (8) in a grid-like manner towards the workspaces (4).

## Revendications

1. Support pour un amortisseur (1), comportant un tourillon (2) conçu sous forme d'une colonne saillant dans le sens de l'amortissement, et qui est entouré hermétiquement par un membre intermédiaire élastique conçu sous forme d'une couronne; dans lequel le membre intermédiaire est fixé, au niveau de son extrémité saillante radialement vers l'extérieur, à un palier (3) et sépare deux espaces de travail (4) remplis de liquide qui sont reliés par au moins une ouverture de liaison (5) constituée comme un canal et fermés, vers l'extérieur, par des parois de délimitation (6, 7) élastiques, qui sont fixées hermétiquement, d'une part au tourillon (2), et d'autre part au palier (3), l'élément intermédiaire étant constitué d'une membrane (8), tandis que les parois de délimitation (6, 7) sont constituées par des cônes creux et que ces cônes creux sont pourvus de pointes qui sont fixées, s'écartant l'une de l'autre, au tourillon (2) et qui sont gauchies l'une par rapport à l'autre au moyen du tourillon (2); caractérisé par le fait que la membrane (8) est pourvue, radialement à l'intérieur du palier (3), d'un profil en forme de U saillant dans le sens de l'amortissement, qui entoure coaxialement le tourillon (2).

2. Support selon la revendication 1, caractérisé par le fait que la membrane (8) est élargie élastiquement par le tourillon (2) au niveau de sa périphérie intérieure.

3. Support selon l'une des revendications 1 ou 2, caractérisé par le fait que la membrane (8) a un contact relativement mobile avec le tourillon (2).

4. Support selon l'une des revendications 1 à 3, caractérisé par le fait que la membrane (8) est pourvue, au niveau de sa périphérie intérieure, d'un épaississement (9) en bourrelet situé sur son pourtour.

5. Support selon l'une des revendications 1 à 4, caractérisé par le fait que les branches du profil de la membrane (8), qui se succèdent en direction radiale et s'étendent sensiblement de manière parallèle à l'axe, ont, dans le sens radial, une épaisseur qui correspond pratiquement à leur écartement radial.

6. Support selon la revendication 5, caractérisé par le fait que la branche située radialement à l'intérieur se trouve au voisinage direct du tourillon (2) et que la branche située radialement à l'extérieur se trouve au voisinage direct du palier (3).

7. Support selon l'une des revendications 1 à 6, caractérisé par le fait que la membrane (8) est enveloppée axialement, au niveau de son extrémité saillante radialement vers l'extérieur, par des plaques de maintien (10) du palier (3) s'étendant sensiblement de manière transversale au sens de l'amortissement.

8. Support selon la revendication 7, caractérisé par le fait que les plaques de maintien (10) enveloppent l'extrémité avec du jeu axial.

9. Support selon la revendication 8, caractérisé par le fait que les plaques de maintien (10) sont, au niveau de l'extrémité de la membrane (8), percées à la manière d'une grille en direction des espaces de travail (4).
